Europäisches Patentamt

European Patent Office

Office européen des brevets

(19)

(11) Veröffentlichungsnummer: **0 210 508**
**B1**

(12) **EUROPÄISCHE PATENTSCHRIFT**

(45) Veröffentlichungstag der Patentschrift:
**12.07.89**

(51) Int. Cl.⁴: **F16H 7/08**

(21) Anmeldenummer: **86109560.2**

(22) Anmeldetag: **12.07.86**

(54) **Spanner für Ketten- und Riementriebe.**

(30) Priorität: **02.08.85 DE 8522243 U**

(43) Veröffentlichungstag der Anmeldung:
**04.02.87 Patentblatt 87/6**

(45) Bekanntmachung des Hinweises auf die Patenterteilung:
**12.07.89 Patentblatt 89/28**

(84) Benannte Vertragsstaaten:
**AT BE CH DE FR GB IT LI LU NL SE**

(56) Entgegenhaltungen:
**EP-A- 0 097 065**
**DE-U- 7 809 294**
**DE-U- 8 522 243**
**FR-A- 688 348**
**FR-A- 1 097 772**
**FR-A- 1 597 250**
**US-A- 2 554 738**
**US-A- 3 081 643**
**US-A- 3 812 733**

(73) Patentinhaber: **Stark, Hans Jürgen, Dörrenberg 13,
D-5630 Remscheid 12(DE)**

(72) Erfinder: **Stark, Hans Jürgen, Dörrenberg 13,
D-5630 Remscheid 12(DE)**

(74) Vertreter: **Sturies, Herbert et al, Patentanwälte Dr. Ing.
Dipl. Phys. Herbert Sturies Dipl. Ing. Peter Eichler
Postfach 20 12 42, D-5600 Wuppertal 2(DE)**

ACTORUM AG

## Beschreibung

Die Erfindung bezieht sich auf einen Spanner für Ketten- und Riementriebe, entsprechend dem Oberbegriff von Anspruch 1, mit einem an einer Kette od.dgl. anliegenden Spannkopf und einem letzteren tragenden und im wesentlichen quaderförmigen Spannkolben, der über an seinen beiden Schmalseiten vorhandene Führungsnuten in einem mit entsprechend beidseitig angeordneten Führungsflächen versehenen und zugleich als Befestigungselement dienenden Führungsgehäuse längsverschieblich geführt ist, wobei der Spannkolben vorderseitig mit seinem Spannkopf aus dem Führungsgehäuse herausragt und unter Wirkung mindestens einer an ihm angreifenden und in ihm untergebrachten Spannfeder steht, die sich mit ihrem anderen Ende gegenüber dem Boden des Führungsgehäuses abstützt.

Ein Spanner für Ketten- und Riementriebe der vorerwähnten Art ist durch die US-A 3 812 733 bekannt. Bei ihm besteht das den Spannkolben umgreifende Führungsgehäuse aus zwei rück- und vorderseitig angeordneten Gehäuseplatten, die durch mehrere Verbindungsbolzen miteinander fest verbunden sind. Beide Gehäuseplatten sind mit Führungsschlitzen versehen, deren Ränder insgesamt vier vergleichsweise scharfkantige Führungsflächen für den dazwischengelegenen und mit der entsprechenden Anzahl, also ebenfalls vier Führungsnuten versehenen Spannkolben bilden. Zur Befestigung des Führungsgehäuses ist auf der rückwärtigen Führungsgehäuseplatte ein L-förmiger Befestigungswinkel angebracht, der mittels einer Schraube und darauf sitzender Mutter mit der rückwärtigen Gehäuseplatte verschraubt ist. Zur sicheren Befestigung an der rückwärtigen Gehäuseplatte sind weiterhin Abwinklungen vorhanden, die den Befestigungswinkel am Ende seines langen Schenkels umklammern.

Der Erfindung liegt die Aufgabe zugrunde, einen Spanner für Ketten- und Riementriebe der gattungsgemäßen Art dahingehend zu verbessern und zu vervollkommnen, daß er von noch einfacherer Bauart und Herstellbarkeit ist sowie eine bessere Führung des Spannkolbens gewährleistet. Diese Aufgabe wird ausgehend von einem gattungsgemäßen Ketten- oder Riemenspanner erfindungsgemäß entsprechend den Merkmalen des Anspruchs 1 dadurch gelöst, daß das Führungsgehäuse aus einem im wesentlichen C-förmige Gestalt aufweisenden Flacheisen und zwei Säulen besteht, welche zwischen den zum Boden und zur Decke abgewinkelten Schenkeln der C-förmigen Gestalt angeordnet sind, und daß die Säulen als die Führungsflächen bildende profilierte Führungssäulen ausgebildet sind, zwischen denen der Spannkolben angeordnet ist, welcher mittig in jeder Schmalseite die zur profilierten Führungssäule korrespondierende Führungsnut aufweist. Auf diese Weise kommt man zu einer besonders einfachen und zweckmäßigen Spanner-Bauart. Die beidseitig seines Spannkolbens jeweils nur einzeln vorhandenen, in bezug auf dessen Schmalseiten mittig angeordneten Führungssäulen gewährleisten eine sichere Führung des Spannkolbens. Die Führungssäulen stellen zugleich auch sicher, daß die Stabilität des zur C-Form abgewinkelten Flacheisens in seinem Boden- und Deckenteil wesentlich vergrößert wird, während umgekehrt die letzterwähnten Teile zur stabilen Befestigung der Führungssäulen beitragen.

Weiterhin hat es sich als sehr vorteilhaft erwiesen, wenn zwischen dem Spannkolben und dem Boden des Führungsgehäuses eine auf den Führungssäulen verschieblich geführte Stützplatte vorgesehen ist, auf der sich die Spannfeder abstützt, wobei wahlweise zwischen der Decke und dem Spannkolben oder zwischen dem Boden und der Stützplatte ein oder mehrere Distanzstücke vorgesehen sind. Auf diese Weise können durch wahlweises Umstecken des oder der Distanzstücke sowohl der Hubbereich als auch die Spannkraft des Spannkolbens variiert und damit den jeweiligen Einsatzverhältnissen weitgehend angepaßt werden.

Für größere Beanspruchungen sieht die Erfindung weiterhin vor, daß zwei in entsprechendem Abstand nebeneinander angeordnete Führungsgehäuse mit aus ihren einander zugewandten Vorderseiten herausragenden Spannkolben und einen zwischen letzteren angebrachten Spannkopf vorgesehen sind. Durch die beiden gegenüberliegenden Spannkolben bzw. Führungsgehäuse wird eine einseitige Belastung des Spannkopfes durch die daran anliegende Kette bzw. den Riemen vermieden, so daß mit solchen Spannern auch größere Spannkräfte ohne weiteres erzeugt bzw. abgetragen werden können. Eine solche Zwillingsbauart mit zwischen zwei Spannkolben gelegenem Spannkopf bildet eine solide Konstruktion. Dabei genügt es, wenn man die beiden Spannkolben der beiden Führungsgehäuse einfach durch zwei Schraubbolzen miteinander verbindet, die durch den Spannkopf hindurchgehen. Die zu beiden Seiten des gemeinsamen Spannkopfes gelegenen Führungsgehäuse können aber auch einen gemeinsamen Boden besitzen.

In der Zeichnung sind mehrere Ausführungsbeispiele erfindungsgemäß beschaffener Spanner für Ketten- und Riementriebe dargestellt. Dabei zeigen

Fig. 1, 2 und 3 eine erste Ausführungsform eines Spanners in der Seitenansicht sowie in jeweils teilweise geschnittener Vorderansicht und Draufsicht,

Fig. 4 und 5 Einzelteile der vorerwähnten Ausführungsart in der Draufsicht,

Fig. 6 und 7 eine Draufsicht auf den Spannkolben und die Seitenansicht in Pfeilrichtung A der Fig. 6,

Fig. 8 und 9 einen mit einer Spannrolle versehenen Riemenspanner in der Seiten- bzw. Vorderansicht, und die

Fig. 10 bis 16 in etwas schematisierter Darstellung verschiedene Spannkolben-Führungen.

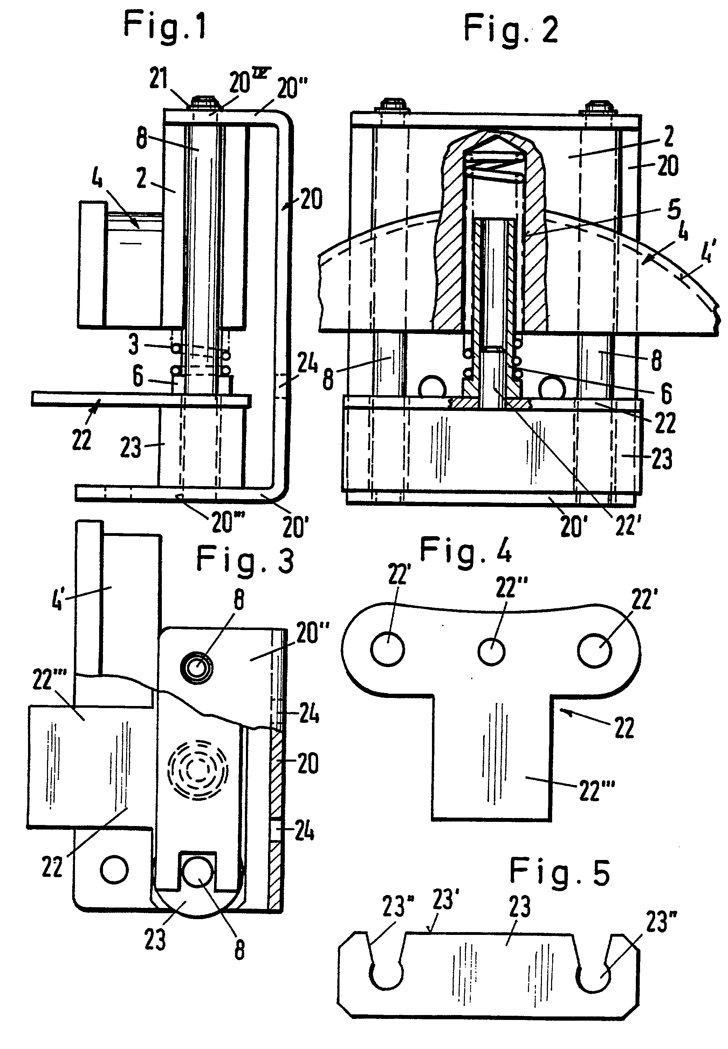

Der in den Fig. 1 bis 3 dargestellte Kettenspanner besitzt ein Führungsgehäuse, das aus einem im wesentlichen C-förmige Gestalt aufweisenden Flacheisen 20 und zwei Säulen 8 besteht, welche zwischen den zum Boden 20' und zur Decke 20" abgewinkelten Schenkeln des C-förmig gestalteten Flacheisens 20 angeordnet sind. Die Säulen 8 sind profiliert und bilden die Führungsflächen für den dazwischen längsverschieblich angeordneten Spannkolben 2, der einen seitlich angebrachten Spannkopf 4 aufweist. Dieser ist im vorliegenden Fall mit einer bogenförmigen Gleitschiene 4' für die daran anliegende Kette versehen. Anstelle der Gleitschiene 4' kann der Spannkopf 4 ebensogut aber auch mit einer Spannrolle versehen sein, um ihn zum Spannen von Riementrieben geeignet zu machen.

Der im wesentlichen quaderförmige Spannkolben 2 ist mit einer mittig gelegenen Sackbohrung 5 versehen, in der sich die um die Federbüchse 6 herumgelegte Schraubendruckfeder 3 befindet, die den Spannkolben 2 und damit auch den an ihm seitlich angebrachten Spannkopf 4 mit dem gewünschten Anpreßdruck gegen die zu spannende Kette drückt. Es versteht sich, daß anstelle einer einzigen Schraubendruckfeder 3 ebenso gut auch mehrere Spannfedern vorhanden sein können, insbesondere bei größer dimensionierten Spannern.

Die beiden Führungssäulen 8 sind mit ihren beiden Enden in im Boden 20' und in der Decke 20" des Führungsgehäuses vorhandene Stecklöcher 20'''' bzw. 20$^{IV}$ eingesteckt, wobei sie mit ihrem oberen, zapfenförmig abgesetzen Ende einfach mittels eines Seegerringes 21 gegen axiales Verschieben gesichert sein können.

Die Schraubendruckfeder 3 ist mit ihrer Federbüchse 6 an einer Stützplatte 22 abgestützt, die sich ihrerseits über das Distanzstück 23 auf dem Boden 20' des Führungsgehäuses 20 abstützt. Die Stützplatte 22 ist entsprechend der in Fig.4 dargestellten Draufsicht mit zwei Bohrungen 22' versehen, über die sie auf den Führungssäulen 8 verschieblich geführt ist. Der weiterhin auf ihr vorhandene Aufsteckdorn 22" dient zum Abstützen der Federbüchse 6. Schließlich weist die Stützplatte 22 noch einen Fingerbetätigungsvorsprung 22'" auf, mit dem sie, wie Fig. 3 zeigt, über das Profil des Spannkopfes 4 vorspringt.

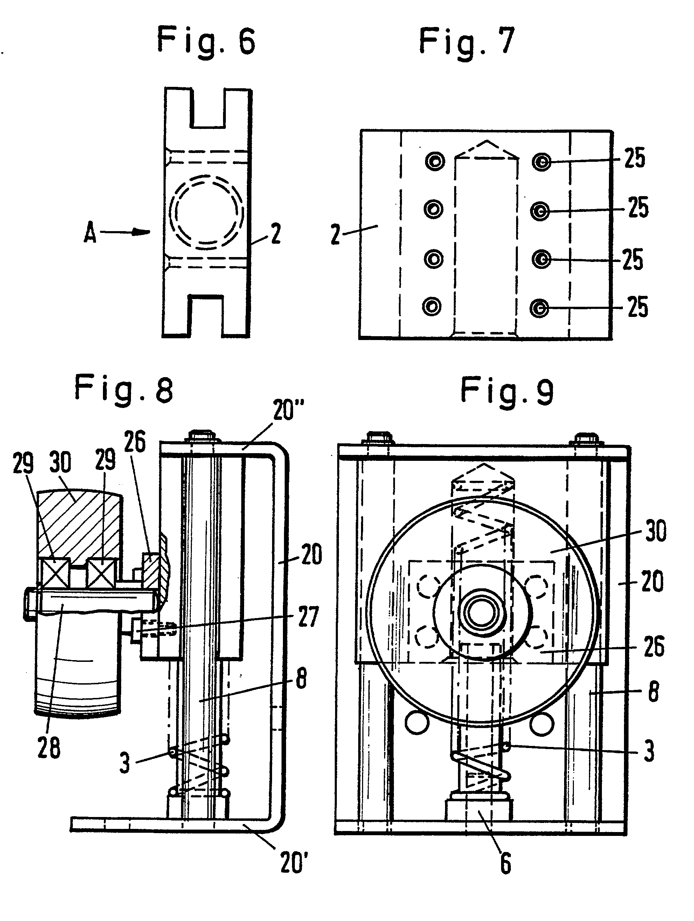

Das Distanzstück 23 ist im wesentlichen quaderförmig gestaltet und, wie Fig. 5 zeigt, auf seiner Längsseite 23' mit auf die Führungssäulen 8 passenden Aufschiebeschlitzen 23" versehen. Hierdurch kann das Distanzstück 23 aus der in Fig. 1 und 2 dargestellten unteren Position, in der es sich zwischen dem Boden 20' des Führungsgehäuses und der Stützplatte 22 befindet, bequem auch in eine obere Position, nähmlich zwischen der Decke 20" des Führungsgehäuses und der Oberseite des Spannkolbens 2 gebracht werden. Dazu braucht lediglich die unter Federdruck stehende Stützplatte 22 an ihrem Fingerbetätigungsvorsprung 22'" etwas angehoben zu werden, wodurch das Distanzstück 23 ohne weiteres von den Führungssäulen 8 weggezogen werden kann. Durch dieses wahlweise Umsetzen des Distanzstücks 36, an dessen Stelle auch mehrere in ihrer Höhe etwa verschieden gehaltene Distanzstücke treten können, kann der Hubbereich des Spannkolbens 2 bzw. seines Spannkopfes 4 höhenmäßig verlagert werden, ohne daß dadurch die Druckwirkug der Spannfeder 3 geändert wird. Ebensogut kann durch das oder die Distanzstücke 23, etwa nach deren gänzlicher oder teilweiser Entfernung, die Vorspannkraft der Spannfeder 3 geändert werden. Das ergibt eine größere Anpassungsfähigkeit an die verschiedensten Einbaubedingungen des Ketten- oder Riemenspanners. Natürlich kann eine einfache Höhenverstellung des Ketten- oder Riemenspanners auch alleine dadurch erreicht werden, daß im Rücken seines Führungsgehäuses 20 mehrere verschieden hoch gelegene Schraubbefestigungslöcher 24 vorgesehen werden.

Eine weitere einfache Höhenverstellmöglichkeit für den Spannkopf 4 besteht darin, daß am Spannkolben 2 entsprechend den Fig. 6 und 7 mehrere tunlichst in gleichen Abständen übereinanderliegende Schraubenbefestigungslöcher 25 für den Spannkolben 2 vorgesehen werden.

Der in Fig. 8 und 9 dargestellte Riemenspanner ist ebenso wie der Kettenspanner nach den Fig. 1 bis 3 mit einem Führungsgehäuse versehen, das aus einem im wesentlichen C-förmig abgewinkelten Flacheisen 20 und den sich zwischen dessen Boden 20' und Decke 20" erstreckenden beiden Führungssäulen 8 besteht. Weiterhin ist auch hier ein unter Wirkung der Spannfeder 3 stehender Spannkolben 2 vorhanden. Am Spannkolben 2 ist seitlich die Kopfplatte 26 mittels Schrauben 27 befestigt. Die Kopfplatte 26 trägt den Achszapfen 28, der beispielsweise in einer entsprechenden Aufnahmebohrung der Kopfplatte 26 eingeschweißt ist. Auf dem Achszapfen 28 ist über die Kugellager 29 die Spannrolle 30 gelagert, über die der zu spannende Riemen läuft. Auch in diesem Fall kann unter Verwendung der Stützplatte 22 und eines oder mehrerer Distanzstücke 23 die Andruckkraft der Spannfeder 3 oder auch der Hubbereich der Spannrolle 30 verändert werden.

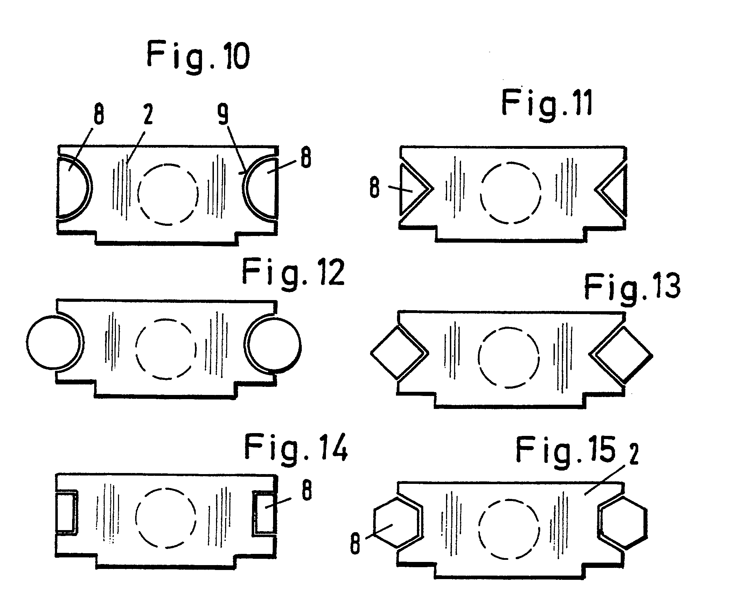

Die Führungssäulen 8 und die damit zusammenwirkenden Führungsnuten 9 am Spannkolben 2 können sehr verschieden profiliert sein. Im Falle der Fig. 10 besitzen die Führungssäulen 8 und die am Spannkolben 2 vorhandenen Führungsnuten 9 einen halbkreisförmigen Querschnitt, während erstere im Falle der Fig. 12 vollkreisförmig profiliert sind. In den Fällen der Fig. 11 und 13 bis 15 sind die Führungssäulen 8 drei- oder mehreckig, z.B. auch quadratisch, rechteckig oder sechseckig profiliert, während die Führungsnuten 9 am Spannkolben 2 entsprechend mindestens zweieckig profiliert sind.

## Patentansprüche

1. Spanner für Ketten- und Riementriebe, mit einem an einer Kette od. dgl. anliegenden Spannkopf (4) und einem letzteren tragenden und im wesentlichen quaderförmigen Spannkolben (2), der über an seinen beiden Schmalseiten vorhandene Führungsnuten (9) in einem mit entsprechend beidseitig angeordneten Führungsflächen (8) versehenen und zugleich als Befestigungselement dienenden Führungsgehäuse längsverschieblich geführt ist, wobei der Spannkolben vorderseitig mit seinem Spannkopf (4) aus dem Führungsgehäuse herausragt und unter Wirkung mindestens einer an ihm angreifenden und in ihm untergebrachten Spannfeder (3) steht, die sich mit ihrem anderen Ende gegenüber dem Boden (20') des Führungsgehäuses abstützt, dadurch gekennzeichnet, daß das Führungsgehäuse aus einem im wesentlichen C-förmige Gestalt aufweisenden Flacheisen (20) und zwei Säulen besteht, welche zwischen den zum Boden (20') und zur Decke (20") abgewinkelten Schenkeln der C-förmigen Gestalt angeordnet sind, und daß die Säulen als die Führungsflächen bildende profilierte Führungssäulen (8) ausgebildet sind, zwischen denen der Spannkolben (2) angeordnet ist, welcher mittig in jeder Schmalseite die zur profilierten Führungssäule korrespondierende Führungsnut (9) aufweist.

2. Spanner nach Anspruch 1, dadurch gekennzeichnet, daß die Führungssäulen (8) kreis- oder halbkreisförmig und die Führungsnuten (9) halbkreisförmig profiliert sind (Fig. 10, 12).

3. Spanner nach Anspruch 1, dadurch gekennzeichnet, daß die Führungssäulen (8) drei- oder mehreckig und die Führungsnuten (9) entsprechend mindestens zweieckig profiliert sind (Fig. 11 und 13 bis 15).

4. Spanner nach einem der Ansprüche 1 bis 3, dadurch gekennzeichnet, daß zwei in entsprechendem Abstand nebeneinander angeordnete Führungsgehäuse mit aus ihren einander zugewandten Vorderseiten herausragenden Spannkolben (2) und einem zwischen letzteren angebrachten Spannkopf (4) vorgesehen sind.

5. Spanner nach Anspruch 4, dadurch gekennzeichnet, daß die zwei Führungsgehäuse einen gemeinsamen Boden (20') besitzen.

6. Spanner nach Anspruch 1, dadurch gekennzeichnet, daß die Führungssäulen (8) mit ihren Enden in im Boden (20') und in der Decke (20") vorhandene Stecklöcher (20''', 20^IV) eingesteckt und an ihrem einen zapfenförmig abgesetzten Ende mittels eines Seegerringes (21) od.dgl. gegen axiales Verschieben gesichert sind.

7. Spanner nach einem der Ansprüche 1 bis 6, dadurch gekennzeichnet, daß zwischen dem Spannkolben (2) und dem Boden (20') eine auf den Führungssäulen (8) verschieblich geführte Stützplatte (22) vorgesehen ist, auf der sich die Spannfeder (3) abstützt, und daß wahlweise zwischen Decke (20") und Spannkolben (2) oder zwischen Boden (20') und Stützplatte (22) ein oder mehrere Distanzstücke (23) vorgesehen sind.

8. Spanner nach Anspruch 7, dadurch gekennzeichnet, daß die Stützplatte (22) mit einem Fingerbetätigungsvorsprung (22") versehen ist.

9. Spanner nach Anspruch 8, dadurch gekennzeichnet, daß die Stützplatte (22) über das Profil des Spannkopfes (4) vorspringt.

10. Spanner nach Anspruch 7, dadurch gekennzeichnet, daß das oder die Distanzstücke (23) im wesentlichen quaderförmig gestaltet und auf ihrer einen Längsseite (23') mit auf die Führungssäulen (8) passenden Aufschiebeschlitzen (23") versehen sind.

11. Spanner nach einem der Ansprüche 1 bis 10, dadurch gekennzeichnet, daß am Spannkolben (2) mehrere in gleichen Abständen übereinander liegende Schraubbefestigungslöcher (25) für eine höhenmäßig unterschiedliche Schraubbefestigung des Spannkopfes (4) vorgesehen sind.

## Claims

1. Tensioner for chain and belt drives, comprising a pusher head (4) arranged to contact a chain or the like, and a pusher piston (2) which is substantially rectangular and which carries the pusher head, the pusher piston being longitudinally displaceably guided in a guide housing, provided with guide surfaces (8) arranged on both sides thereof and serving additionally as a fixing member, by means of guide grooves (9) provided in both narrow sides of the housing, wherein the pusher piston has its pusher head (4) projecting from the front of the guide housing and is subject to the action of at least one bias spring (3) which acts against the piston and is seated in the piston, said at least one spring being seated at its other end against the base (20') of the guide housing, characterised in that the guide housing comprises an essentially C-shaped flat-iron section (20) and two pillars which are positioned between the angled legs of the C-shaped section which form the base (20') and the top (20") thereof, and in that the pillars are formed as guide pillars (8) profiled to define the guide surfaces, and between which the pusher piston (2) is arranged, with said pusher piston having centrally in each narrow side thereof the guide groove (9) corresponding to the profiled guide pillar.

2. Tensioner according to claim 1, characterised in that the guide pillars (8) are circular or semicircular in shape and the guide grooves (9) are semicircular in shape (Fig. 10, 12).

3. Tensioner according to claim 1, characterised in that the guide pillars (8) are triangular or polygonal and the guide grooves (9) are shaped correspondingly with at least two angles (Fig. 11 and 13 to 15).

4. Tensioner according to one of claims 1 to 3, characterised in that two guide housings arranged adjacent to each other at appropriate spacing are provided with pusher pistons (2) projecting from their facing front sides and are provided with a pusher head (4) mounted between the pistons.

5. Tensioner according to claim 4, characterised in that the two guide housings have a common base (20').

6. Tensioner according to claim 1, characterised in that the guide pillars (8) have their ends socketed into holes (20''', 20^IV) provided in the base (20') and in the top (20") of the housing and are prevented from axial displacement at their one end which is pin-shaped by means of a circlip (21) or the like.

7. Tensioner according to one of claims 1 to 6, characterised in that between the pusher piston (2) and the base (20') there is provided a support plate (22) guided displaceably on the guide pillars (8), on which support plate the bias spring (3) is seated, and in that one or more spacer members (23) are provided as desired between the top (20") of the housing and the pusher piston (2) or between the base (20') of the housing and the support plate (22).

8. Tensioner according to claim 7, characterised in that the support plate (22) is provided with a protuberance (22"') which is manually actuable.

9. Tensioner according to claim 8, characterised in that the support plate (22) projects beyond the contour of the pusher head (4).

10. Tensioner according to claim 7, characterised in that the spacer member or members (23) are substantially rectangular and are provided on one longitudinal face (23') thereof with receiving slots (23") matching the guide pillars (8).

11. Tensioner according to one of claims 1 to 10, characterised in that a plurality of screw fastening holes (25) are provided in the pusher piston (2) at equal spacings above one another for a screw fastening of the pusher head (4) at different heights.

## Revendications

1. Tendeur pour transmissions à chaîne et à courroie, comportant une tête de tension (4) s'appuyant contre une chaîne ou analogue et un piston de tension (2) portant la tête de tension, qui a une forme essentiellement parallélépipédique et qui, par l'intermédiaire de rainures de guidage (9) prévues sur ses deux petits côtés, est guidé de manière à pouvoir coulisser longitudinalement dans un boîtier de guidage muni de surfaces de guidage (8) convenablement disposées des deux côtés et servant en même temps d'élément de fixation, le piston de tension faisant saillie, par sa tête de tension (4), vers l'avant hors du boîtier de guidage et se trouvant sous l'action d'au moins un ressort de tension (3) agissant sur lui, qui est logé en lui et qui s'appuie, par son autre extrémité, contre le plancher (20') du boîtier de guidage, caractérisé en ce que le boîtier de guidage est constitué d'un fer plat (20) ayant sensiblement la forme d'un C, et de deux colonnes disposées entre les ailes du C qui sont pliées suivant la direction du plancher (20') et du plafond (20"), et en ce que les colonnes sont conçues sous la forme de colonnes de guidage profilées (8) formant les surfaces de guidage et entre lesquelles est disposé le piston de tension (2) qui présente, au milieu de chaque petit côté, la rainure de guidage (9) correspondant à la colonne de guidage profilée.

2. Tendeur selon la revendication 1, caractérisé en ce que les colonnes de guidage (8) sont profilées en forme de cercle ou de demicercle et les rainures de guidage (9) en forme de demi-cercle (figure 10, 12).

3. Tendeur selon la revendication 1, caractérisé en ce que les colonnes de guidage (8) sont triangulaires ou polygonales et les rainures de guidage (9) sont profilées de façon correspondante sur au moins deux côtés (figure 11 et 13 à 15).

4. Tendeur selon l'une des revendications 1 à 3, caractérisé en ce que sont prévus deux boîtiers de guidage disposés l'un à côté de l'autre à une distance appropriée, et comportant des pistons de tension (2) faisant saillie sur leurs faces avant tournées l'une vers l'autre et une tête de tension (4) rapportée entre ces derniers.

5. Tendeur selon la revendication 4, caractérisé en ce que les deux boîtiers de guidage possèdent un plancher commun (20').

6. Tendeur selon la revendication 1, caractérisé en ce que les colonnes de guidage (8) sont enfichées, par leurs extrémités, dans des trous (20''', 20$^{IV}$) prévus dans le plancher (20') et dans le plafond (20") et sont bloquées contre un coulissement axial, à l'une de leurs extrémités qui est étagée en forme de téton, au moyen d'un anneau de retenue (21) du type Seeger ou analogue.

7. Tendeur selon l'une des revendications 1 à 6, caractérisé en ce qu'entre le piston de tension (2) et le plancher (20') est prévue une plaquette d'appui (22) guidée de manière à pouvoir coulisser sur les colonnes de guidage (8) et sur laquelle s'appuie le ressort de tension (3), et en ce qu'au choix entre le plafond (20") et le piston de tension (2) ou entre le plancher (20') et la plaquette d'appui (22) sont prévues une ou plusieurs pièces d'écartement (23).

8. Tendeur selon la revendication 7, caractérisé en ce que la plaquette d'appui (22) est munie d'une saillie (22''') à actionnement par un doigt.

9. Tendeur selon la revendication 8, caractérisé en ce que la plaquette d'appui (22) fait saillie au-delà du profil de la tête de tension (4).

10. Tendeur selon la revendication 7, caractérisé en ce que la ou les pièces d'écartement (23) ont sensiblement une forme parallélépipédique et sont munies, sur l'un de leurs côtés longitudinaux (23') de fentes de coulissement (23") adaptées aux colonnes de guidage (8).

11. Tendeur selon l'une des revendications 1 à 10, caractérisé en ce que sur le piston de tension (2) sont prévus plusieurs trous de fixation par vis (25) situés l'un au-dessus de l'autre à égale distance pour une fixation par vis de la tête de tension (4) à des hauteurs différentes.

# Fig.1

# Fig. 2

# Fig. 3

# Fig. 4

# Fig. 5

## Fig. 6

## Fig. 7

## Fig. 8

## Fig. 9

Fig. 10

Fig. 11

Fig. 12

Fig. 13

Fig. 14

Fig. 15